# EUROPEAN PATENT APPLICATION

(11) **EP 3 509 266 A1**
(43) Date of publication of application: **10.07.2019**
(21) Application number: 17845244.7
(22) Date of filing: 18.08.2017
(51) Int. Cl.: H04L 29/06

(54) **VERIFICATION METHOD AND DEVICE**

(30) Priority: 31.08.2016 CN 201610798104
(71) Applicant: Alibaba Group Holding Limited, Grand Cayman (KY)
(72) Inventor: ZHANG, Shijing, Hangzhou Zhejiang 311121 (CN); JIANG, Xuan, Hangzhou Zhejiang 311121 (CN); LI, Junjie, Hangzhou Zhejiang 311121 (CN)
(74) Representative: Branderhorst, Matthijs Pieter Arie
(86) International application number: PCT/CN2017/097951
(87) International publication number: WO 2018/040942

(57) **Abstract**

The present application discloses a verification method and device. The method comprises: generating a security question and an answer for the user matching the security question for verifying the user; determining, according to category identification information of the answer for the user, user data of users corresponding to the category identification information; searching, in the determined user data, for pieces of user data related to the answer for the user to serve as distraction answers; and verifying the user according to the security question, the answer for the user, and the distraction answers. In the present application, the generated distraction answers and the answer for the user have the same category identification information, so that the difference between the distraction answers and the answer for the user is relatively small, which ensures that the distraction answers are similar to the answer for the user, effectively increases the distraction effect of the distraction answers, and lowers the possibility of the answer for the user being accurately guessed by an illegitimate user.

## Description

The present application claims priority to the Chinese Patent Application No. 201610798104.0, filed on August 31, 2016 and entitled "Verification Method and Device," which is incorporated herein by reference in its entirety.

### Technical Field

The present application relates to the field of computer technologies, and in particular, to a verification method and device.

### Background

With the development of information technologies, networks have become an important channel for users to acquire business services. A user can acquire corresponding online businesses by using the user's personal information in a corresponding online system (e.g., a website). To ensure the security of the process in which the user acquires online businesses, user identity authentication has become an important step in the business process (wherein the identity authentication is a process of verifying a user's personal identity).

In current technologies, security question verification, as a common manner of identity authentication, has been used extensively. In scenarios of password recovery, user identity authentication is performed mostly in the manner of security question verification. For example, an online system automatically generates a corresponding security question, generates a correct answer that matches the security question according to user information, and meanwhile, randomly generates a number of incorrect answers. When security question verification needs to be performed on a user, the online system displays the generated security question and a number of answer options to the user, so as to complete the identity authentication of the user.

In the process of automatically generating answer options by the online system, however, the difference between the correct answer and incorrect answers is relatively big, as the incorrect answers are generated in a random manner. As a result, an illegitimate user can easily select the correct answer and "pretend to be" the user to pass the security question verification.

### Summary

Embodiments of the present application provide an information verification method to solve the problem of current technologies that the difference between the correct answer and incorrect answers of a security question is relatively big.

The embodiments of the present application provide a verification device configured to solve the problem of current technologies that the difference between the correct answer and incorrect answers of a security question is relatively big.

The embodiments of the present application employ the following technical solution:
the verification method provided in the embodiments of the present application comprises:
generating a security question and an answer for a user matching the security question for verifying the user;
determining, according to category identification information of the answer for the user, user data of users corresponding to the category identification information;
searching, in the determined user data, for pieces of the user data related to the answer for the user to serve as distraction answers; and
verifying the user according to the security question, the answer for the user, and the distraction answers.

The verification device provided in the embodiments of the present application comprises:
a security question module configured to generate a security question and an answer for a user matching the security question for verifying the user;
a determining module configured to determine, according to category identification information of the answer for the user, user data of users corresponding to the category identification information;
a distraction answer module configured to search, in the determined user data, for pieces of the user data related to the answer for the user to serve as distraction answers; and
a verification module configured to verify the user according to the security question, the answer for the user, and the distraction answers.

At least one of the above technical solutions employed by the embodiments of the present application can achieve the following advantageous effects:
In a process that a server of a business provider performs identity authentication of a user by using a security question, the server generates a security question for verifying the user and generates an answer for the user matching the security question (i.e., the correct answer), and determines, according to the category identification information of the generated answer for the user, user data corresponding to the category identification information. All determined user data have the same category identification information as that of the answer for the user. In other words, the determined user data and the answer for the user belong to the same type of user data. Then, user data related to the answer for the user can be searched for in the determined user data to serve as distraction answers. Apparently, the distraction answers and the answer for the user have the same category identification information, so that the difference between the distraction answers and the answer for the user is relatively small, which ensures that the distraction answers are similar to the answer for the user. Consequently, the server can verify identity of the user according to the security question and answer options comprising the answer for the user and the distraction answers. Compared with the manners in current technologies, the distraction answers are not randomly generated in the present application, but has the same category identification information as that of the answer for the user. In other words, the answer for the user and the distraction answers are in the same category, which effectively increases the distraction effect of the distraction answers, then lowers the possibility of the answer for the user being accurately guessed by an illegitimate user, and improves the security of security question verification.

### Brief Description of the Drawings

The accompanying drawings herein are used to provide a further understanding of the present application and constitute a part of the present application. The illustrative embodiments and description of the present application are used to describe the present application, and do not constitute inappropriate limitation to the present application. In the accompanying drawings:
FIG. 1 is a schematic diagram of a verification process according to some embodiments of the present application;
FIG. 2 is a schematic structural diagram of a verification device according to some embodiments of the present application.

### Detailed Description

To make the objectives, technical solutions, and advantages of the present application clearer, the technical solutions of the present application will be clearly and completely described below with reference to the embodiments and accompanying drawings of the present application. Apparently, the described embodiments are merely some, not all, embodiments of the present application. All other embodiments obtainable by a person skilled in the art without creative effort and on the basis of the embodiments of the present application shall fall within the scope of the present application.

As described above, when it is necessary to perform identity authentication of a user, an online system automatically generates a corresponding security question and a number of answer options corresponding to the security question, so that the user selects from the answer options of the security question to complete the identity authentication. Since the difference between the correct answer and incorrect answers among a number of answer options generated by the online system is relatively big, however, the distraction effect of the incorrect answers is relatively weak. As a result, it would be easy for an illegitimate user to select the correct answer through guessing, inference, or the like.

Therefore, an identity authentication-based information processing method is provided in the embodiments of the present application, so that a server can generate a distraction answer that is similar to the correct answer, making it difficult for an illegitimate user to find out the correct answer.

It should be noted that the verification process in the embodiments of the present application can be implemented by a server at the back end of an online business provider, wherein the online business provider includes, but is not limited to, business providers capable of providing online businesses, such as websites, telecom operators, data centers, and the like. The server configured to implement the verification process may be, for example, a server responsible for security maintenance functions, such as a security center server at the back end of an online business provider, which is not a limitation to the present application. In the following description, servers at the back end of online business providers are all referred to as server.

The technical solutions of the embodiments of the present application will be described in detail below with reference to the accompanying drawings.

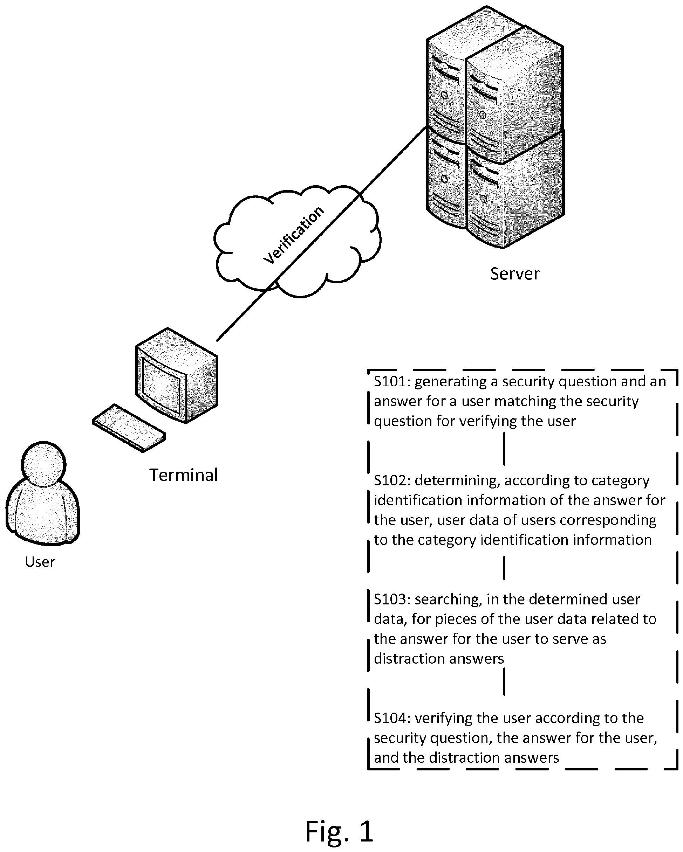

As shown in FIG. 1, a verification process implemented in the present application is illustrated. The process comprises, for example, the following steps:
S 101: generating a security question and an answer for a user matching the security question for verifying the user.

In the embodiments of the present application, the security question is typically generated after verification is triggered. In an exemplary application, it can be triggered by a user or can be triggered by a server at its discretion according to the needs of the exemplary application.

For example, in a possible scenario, a user can proactively send a verification request. At this point, the verification request is used to trigger a security question based verification process. As one manner in the scenario, the security question based verification process can be applied in a scenario of password recovery. In other words, when the user clicks the option "password recovery" on a corresponding interface (e.g., an account login interface of a website), it is necessary to verify the identity of the user. Therefore, the operation of the user to click the option can be deemed as sending a verification request. Furthermore, referring to FIG. 1, the verification request is sent to a server through a terminal used by the user, and then the server receives the verification request sent by the user.

In another possible scenario, the server can perform identity verification of a user at its discretion according to a corresponding verification rule. For example, according to a set period, the server proactively generates a security question; alternatively, the server proactively generates a security question and initiates verification of the user when determining that some operations of the user have risks. These examples do not constitute limitations to the present application.

In the embodiments of the present application, the security question can come from a preset question library. In other words, different questions can be set in advance for different scenarios and business application circumstances (the process can also be set by a corresponding business program, which does not constitute a limitation to the present application) and saved into a corresponding question library. After verification is triggered, therefore, the server generates a security question for the user based on the question library.

In the above manner of the embodiments of the present application, it can be concluded that the user (or an illegitimate user) cannot predict the security question.

Therefore, the server will determine an answer for the user. The answer for the user is the correct answer with respect to the user. It can be understood that, as a manner in the embodiments of the present application, the answer for the user is typically determined according to user data. For example, if the security question generated for the user is "what nickname did you use?", then a nickname used by the user can be selected from the user's own account data as the answer for the user matching the security question.

In a possible exemplary application scenario, the answer for the user can be determined in a manner of answer library. For example, an answer library corresponding to the generated security question is determined according to a pre-established corresponding relationship between security questions and answer libraries, and the answer for the user matching the security question is generated according to the user data in the answer library. The user data stored in the answer library should be understood as user data of users.

Multiple pieces of user data of the user may be stored in the same answer library. In the process of generating the answer for the user according to the user data in the answer library, therefore, one piece of user data can be selected, according to the use time and use frequency of the user data, to generate the answer for the user. For example, when the answer library comprises multiple pieces of user data of the same user, the use time is determined for the multiple pieces of user data, respectively, and the piece of user data having the use time closest to the current time is selected from the multiple pieces of user data; alternatively, the times of use is determined for the multiple pieces of user data, respectively, and the piece of user data having the highest times of use is selected. These examples do not constitute limitations to the present application.

In the embodiments of the present application, the user data can be business data generated according to business operations of a user, such as products purchased by the user and an amount of transfer, or other data related to business; or can be personal information data of the user, such as the user's account name, the user's name, date of birth, and other data. These examples do not constitute limitations to the present application.

S102: determining, according to category identification information of the answer for the user, user data of users corresponding to the category identification information.

In the embodiments of the present application, since the answer for the user is generated according to the user data, the category identification information of the answer for the user is the category identification information of the user data. As a feasible manner in the embodiments of the present application, the server can generate category identification information of user data in advance for user data of each user and categorize the user data based on the category identification information. Then, according to category identification information of the answer for the user, the server can determine user data having the same category identification information.

Here, the category identification information comprises: at least one personal information attribute identification and/or at least one business attribute identification. For example, the personal information attribute identification can comprise gender identification (e.g., identifications like "male" and "female"), age identification (which can be either a certain age or a divided age range), account identification, etc., and the business attribute identification can comprise business type identification (e.g., identifications like "transfer business" and "payment business"), product category identification, etc.

Apparently, the determining corresponding user data according to category identification information of the answer for the user in this step is to determine a distraction answer from the user data, i.e., to carry out the following step S103.

S103: searching, in the determined user data, for pieces of the user data related to the answer for the user to serve as distraction answers.

In an exemplary application, multiple answer options are typically provided for a security question, and answers other than the answer for the user (i.e., incorrect answers) in the multiple answer options can have a distraction effect. In the embodiments of the present application, therefore, the answers other than the answer for the user are also referred to as distraction answers.

Considering that the difference between multiple answer options of a security question is so big in an exemplary application that an illegitimate user can easily select the correct answer option to pose as the user, all distraction answers in the embodiments of the present application are related to the answer for the user. The "related to" in the embodiments of the present application can mean that the distraction answers are similar to the answer for the user in character length, answer format, and answer content, thereby having a distraction effect.

For example, a nickname used by a user is "xiaoming123," then the answer for the user matching the security question, "what was the nickname you used before?", can be "xiaoming123," while corresponding distraction answers can be "xiaoming-aaa," "xiao-ming," and the like. In fact, "xiaoming-aaa" and "xiao-ming" are nicknames of other users.

It can be seen from this example that the distraction answers are very similar to the answer for the user, which increases the difficulty of recognition by an illegitimate user and further lowers the probability that the answer for the user is guessed correctly.

In other words, the distraction answers are essentially user data as well. Moreover, the user data serving as distraction answers has the same category identification information as that of the answer for the user. In the example above, the category identification information is user nickname for both the answer for the user and the distraction answers.

S104: verifying the user according to the security question, the answer for the user, and the distraction answers.

After having generated the security question and corresponding answer options, the server can perform identity authentication of the user who sends the verification request. In one manner, the server can send the security question and its answer options to a terminal used by the user, so that the user can view the security question and the answer options on a corresponding page, and select one of the answer options to complete the identity authentication.

Through the steps above, in a process that a server of a business provider performs security question based identity authentication of a user, the server generates a security question and an answer for the user to the security question (i.e., the correct answer) for verifying the user, and determines, according to the generated category identification information of the answer for the user, user data corresponding to the category identification information. All determined user data has the same category identification information as that of the answer for the user. In other words, the determined user data and the user data of the answer for the user belong to the same category of user data. Then, user data related to the answer for the user can be searched for in the determined user data to serve as distraction answers. Apparently, the distraction answers and the answer for the user have the same category identification information, so that the difference between the distraction answers and the answer for the user is relatively small, which ensures that the distraction answer is similar to the answer for the user. Consequently, the server can perform, according to the security question and answer options comprising the answer for the user and the distraction answers, identity verification of the user. Compared with the manners in current technologies, the distraction answers are not randomly generated in the present application, but has the same category identification information as that of the answer for the user. In other words, the answer for the user and the distraction answers are in the same category, which effectively increases the distraction effect of the distraction answers, then lowers the possibility of the answer for the user being accurately guessed by an illegitimate user, and improves the security of security question verification.

As described above, the answer for the user and distraction answers are both a type of user data. To find distraction answers related to the answer for the user, it is necessary to determine category identification information of all user data. For example, prior to generating a security question and an answer for a user matching the security question for verifying the user, the method above can further comprise the following steps:
Step I: acquiring user data of users;
Step II: determining category identification information of the acquired user data;
Step III: categorizing the user data according to the category identification information of the user data, and generating an answer library corresponding to the category identification information for each category of user data after the categorization.

Through the above process, the acquisition of user data of users can be implemented by a corresponding data acquiring function in the server, which is not defined herein. The process of determining category identification information of all the acquired user data can be that the server assigns user data corresponding category identification information based on metadata of user data (or attribute information of user data), which does not constitute a limitation to the present application.

User data can be categorized according to category identification information of the user data. For example, account name data are categorized into one category, product data are categorized into one category, etc. Furthermore, corresponding answer libraries can be created for the categorized user data. It should be understood that the category identification information based on which the user data are categorized is essentially common category identification information of this category of user data, such as the account name data, namely, user data of this category all belong to account name. Therefore, the category identification information of "account name" is the common category identification information of this category of user data; similarly, the category identification information of "product" is the common category identification information of product data.

It is still possible for the user data categorized based on the common category identification information to have other category identification information. For example, according to the common category identification information of "product," all product data can be categorized into one category, but each piece of product data further has its respective sub-category identification information, such as clothing, daily products, digital products and the like. As a manner in the embodiments of the present application, user data can be categorized into many different categories of user data according to various category identification information of the user data in the process of answer library creation, and then corresponding various answer libraries are created. Alternatively, as another manner, the user data of users are divided into a number of categories only according to a number of set pieces of category identification information, and a corresponding number of answer libraries are created. Which manner to use can be selected according to needs in an exemplary application, which does not constitute a limitation to the present application.

Therefore, a corresponding relationship with security questions can be established based on common category identification information of an answer library in each category. For example, when the security question is "what nickname did you use?", a corresponding relationship can be established between the security question and an answer library with the category identification information of "nickname."

As a possible manner, a security question can be generated in real time based on category identification information. For example, a security question, "what nickname did you use?", is generated based on the category identification information of "nickname." In another manner, a plurality of security questions can be generated based on category identification information and stored in a question library. These do not constitute a limitation to the present application.

In addition, it should be noted that, in an exemplary application, user data is continuously generated with users conducting corresponding business operations or addition of new users. As an optional manner in the embodiments of the present application, the server dynamically acquires newly generated user data to keep user data in all answer libraries updated. In other words, the acquiring user data of users comprises, for example, acquiring changed user data when the user data of users changes; alternatively, acquiring user data of users according to a set period. Therefore, the method further comprises: according to the acquired user data, updating an answer library corresponding to the user data.

On the basis of the above description, the server can generate, at its discretion, a corresponding security question and multiple answer options in the verification process. In this process, moreover, there is no need for a user to edit corresponding answer options in advance. Among the multiple answer options, the similarity (i.e., association) between the answer for the user and other distraction answers will impact the possibility of an illegitimate user accurately guessing the answer for the user (the more similar the distraction answers are to the answer for the user, the less likely an illegitimate user accurately guesses the answer for the user).

To ensure that distraction answers are related to the answer for the user, the distraction answers come from an answer library corresponding to the security question. For example, if a security question is "what nickname did you use?", all user data stored in the answer library corresponding to the security question are apparently associated nickname data (which may be nicknames used by other users or may be nickname data that is generated in advance). As a result, it can be ensured that all distraction answers generated based on the answer library are nicknames. Provided that an answer for the user is determined from the answer library, the server can search in the corresponding answer library and select distraction answers.

The process that the server searches for and selects a distraction answer will be analyzed and described in detail below:
In the embodiments of the present application, there are mainly two manners in which the server searches for and selects a distraction answer, for example:

### The first manner:

An answer option (either the answer for the user or a distraction answer) of a security question can be regarded as a character string. The character string may consist of texts, numbers, and symbols. For a distraction answer to have a strong distraction effect, the distraction answer needs to be similar to the answer for the user in expression and meaning of characters. In other words, the distraction answer is similar to the answer for the user semantically and/or in character expression.

For example, if the answer for the user of a security question is "red down coat," a corresponding distraction answer can be "green down coat," "yellow down coat," or the like for the purpose of similarity in semantics and character expression. Therefore, both the distraction answer and the answer for the user semantically mean down coat in the example. In terms of character expression, meanwhile, both the distraction answer and the answer for the user have 5 characters in Chinese and are expressed in a format of "color" + "article." Therefore, it can be regarded that the similarity between the answer for the user and the distraction answer is high.

In this manner, therefore, the process that the server searches for a distraction answer related to the answer for the user in the answer library can, for example, comprise: determining semantics and/or characters of the answer for the user, determining, according to the semantics and/or characters of the answer for the user, a similarity between each piece of user data in the answer library and the answer for the user, and searching for a distraction answer related to the answer for the user in the answer library according to the determined similarity.

In this process, a corresponding semantics recognition algorithm can be used for determining semantics of the answer for the user; in addition, a similarity algorithm, such as Euclidean distance similarity and cosine similarity, etc., can be used for determining the similarity, which will not be described herein.

### The second manner:

In an exemplary application, security questions can typically be divided into two types: one type of security questions are associated with the use of business services by users, such as "products you bought this week," "the clothing brand having the highest number of purchases by you," and the like. Apparently, these two security questions are closely associated with purchase operations of a user. The other type of security questions are associated with personal information of a user, such as "account name you used," "nickname you used," and the like. Apparently, these two security questions are associated with a user's account information (the account information belongs to personal information of a user). In the embodiments of the present application, different manners are used to determine corresponding distraction answers for the above two types of security questions.

For the first type of security questions:
This type of security questions are typically associated with business services, and corresponding answer options are typically business data corresponding to the business services. For example, the security question of "products you bought this week" is associated with purchase business. Then, answer options corresponding to the security question can be names of products (names of products are a type of business data), such as "Brand XX cleansing cream," "Brand YY shampoo," and the like.

It can be seen from the example above that to ensure an association between a distraction answer and the answer for the user to this type of security questions, the distraction answer needs to have a business attribute identification similar to that of the answer for the user. In an optional manner of the embodiments of the present application, the business attribute identification is reflected as a category identification of a business (e.g., a product category identification). In other words, in this manner, the distraction answer and the answer for the user can have the same business category identification. Business category identifications are categorized by an online business provider in advance, which will not be described herein.

Therefore, the association between the answer for the user and the distraction answer can be ensured. For example, if the security question is "products you bought," and if a user purchased a cleansing cream, then the server determines the cleansing cream to be the answer for the user (i.e., the correct answer). Assuming that the product category identification of the cleansing cream is, for example, "facial care," the server will further search for user data having the product category identification of "facial care" in the answer library with the category identification information of "product" as distraction answers. The obtained security question and answer options are:
Products you bought:
A. Facial moisturizer
B. Cleansing cream
C. Liquid foundation
D. Facial mask

In this example, Option B is the correct answer (i.e., the answer for the user), while other options are distraction answers. It can be seen that the distraction answers and the answer for the user all have the product category identification of "facial care," so that the distraction answers are related to the answer for the user.

In some circumstances, however, it is still possible for an illegitimate user to accurately guess the correct answer in the above answer options. For example, if a user is a male and the user's gender information is acquired by the illegitimate user, then the illegitimate user can infer, according to the gender information, that Option B is the correct answer (that is because the products corresponding to options A, C, and D more likely tend to be facial care products for females).

On the basis of the content above, therefore, corresponding personal information attribute identifications will be considered in the process of selecting a distraction answer from an answer library, so as to further strengthen the association between the distraction answer and the answer for the user.

Here, personal information attribute identifications can comprise: a user's natural attributes and the user's business attributes. For example, the user's natural attributes can be attributes such as name, gender, age, and the like. The user's business attributes can be the user's IP address, the user's location, products preferred by the user, the user's consumption level, and the like.

Data in the answer library can be further categorized according to personal information attribute identifications. For example, cleansing cream can be divided into cleansing cream for males and cleansing cream for females according to user gender. Therefore, data in an answer library can be categorized into a plurality of categories according to personal information attribute identifications.

In the example above, if categorization according to personal information attributes is added for the product data in the answer library and if the user is a male, then the product data selected by the server when selecting a distraction answer will simultaneously have two pieces of category identification information, "facial care" and "male." Therefore, the obtained security question and answer options are:
Products you bought:
A. Cleansing cream
B. Shave foam
C. Cleansing clay
D. Razor

In this example, option A is the answer for the user, while other options are distraction answers. It can be seen that the association between the answer options in this example is stronger. Compared with the preceding example, all products in the four options have the category identification information of "male," and it will be more difficult for an illegitimate user to accurately guess the correct answer even if the illegitimate user learns about the user's gender. In other words, by combining with personal information attribute identifications, the possibility that an illegitimate user accurately guesses the correct answer can be further lowered.

For the second type of security questions:
This type of security questions are typically associated with personal information of a user. Correspondingly, answer options for this type of security questions come from the user's personal information, such as the user's account name, nickname, date of birth, age range, address, etc. Character expressions are more emphasized for answer options of this type of security questions. In the process of selecting a distraction answer in a corresponding answer library, therefore, the server selects a distraction answer having a similar character expression according to the character expression of the answer for the user.

For example, data in an answer library can be categorized according to character type, structure, length and the like. After the answer for the user (the correct answer) is determined, a corresponding distraction answer is further selected.

For example, if the security question is "account name you used," the server determines that the account name used by the user for identity authentication is "xiaoming123," namely, the account name is the answer for the user matching the security question. It can be seen from the account name that the account name comprises English letters + numbers. Therefore, the server searches for account names in the category of "English letters + numbers" in the answer library having the category identification information of "account;" meanwhile, the server further searches for account names having a matching character length in the account names of the category, and finds the English letters of "xiaoming" according to the sequence of English letters.

The description above intends to enhance similarity between a distraction answer and the answer for the user, which can then strengthen the distraction effect of the distraction answer. Therefore, the generated security question and answer options can be:
Account name you used:
A. xiaoming789
B. xiaoming333
C. xiaommg123
D. xiaoming666

In this example, option C is the answer for the user (i.e., the correct answer), while other options are distraction answers. It can be seen from the example that the similarity among the answer options of the security question is high (i.e., the character expressions are similar), so that it is difficult for an illegitimate user to accurately guess the correct answer.

Considering the description above, the searching for user data related to the answer for the user according to the category identification information in Step S104 comprises: when the category identification information of the answer for the user is a business attribute identification, determining an answer library corresponding to the category identification information according to the business attribute identification, searching in the determined answer library, according to a personal information attribute identification of the user, for user data corresponding to the personal information attribute identification, and searching in the found user data for user data related to the answer for the user according to the semantics and/or characters of the answer for the user; or
when the category identification information of the answer for the user is a personal information attribute identification, determining an answer library corresponding to the category identification information according to the personal information attribute identification, and searching for user data related to the answer for the user in the determined answer library according to the semantics and/or characters of the answer for the user.

The user data related to the answer for the user can be used as distraction answers. In an exemplary application, the searching for user data related to the answer for the user is based on the similarity between the user data and the answer for the user in terms of semantics and/or characters. For example, the searching for user data related to the answer for the user according to the semantics and/or characters of the answer for the user comprises: determining a similarity between the answer for the user and the user data according to the semantics and/or characters of the answer for the user, and searching for user data related to the answer for the user according to the similarity.

In the embodiments of the present application, after generating the security question for the user subject to identity authentication, the server determines the answer for the user, on the basis of which the server determines a distraction answer similar to the answer for the user in a corresponding answer library. As the distraction answer is similar to the answer for the user in data attributes, semantics and/or characters, the distraction answer can have a strong confusing effect, so that it is difficult for an illegitimate user to accurately guess the correct answer from the answer options.

In addition, it should be noted that there is typically a limit to the number of answer options ultimately displayed to a user (i.e., a set number), such as 3 to 6 options, while the server may find a plurality of distraction answers from an answer library and the number is greater than the set number of answer options. In this case, the server will further select the set number of distraction answers from the found plurality of distraction answers according to the similarity with the answer for the user.

In other words, as an optional manner in the embodiments of the present application, the searching for user data related to the answer for the user as distraction answers comprises: if the number of the pieces of the found user data is greater than a set threshold, selecting, from the found user data and according to the similarity in a descending order, the set number of pieces of user data as distraction answers.

The verification method according to some embodiments of the present application is described above. On the basis of the same concept, a verification device is further provided according to some embodiments of the present application.

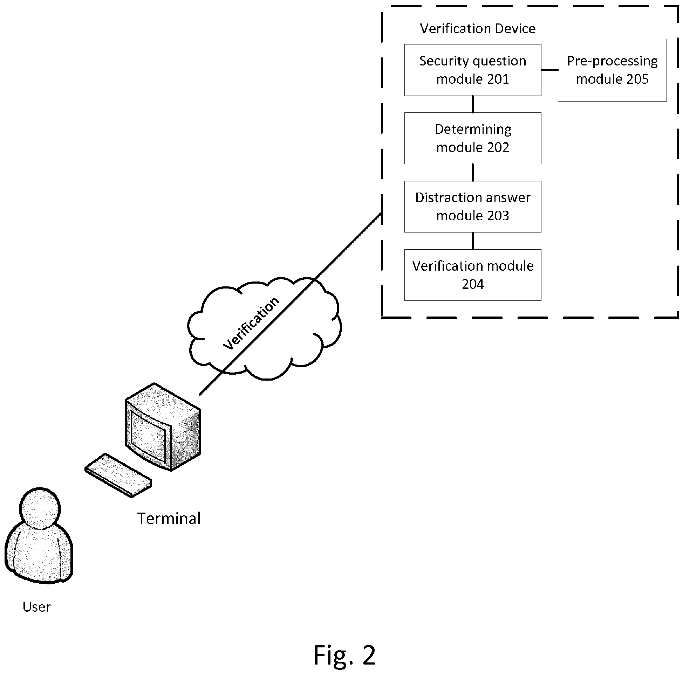

As shown in FIG. 2, the verification device is provided at the server side of a business provider, and the device comprises:
a security question module 201 configured to generate a security question and an answer for a user matching the security question for verifying the user;
a determining module 202 configured to determine, according to category identification information of the answer for the user, user data corresponding to the category identification information;
a distraction answer module 203 configured to search, in the determined user data, for pieces of the user data related to the answer for the user to serve as a distraction answer; and
a verification module 204 configured to verify the user according to the security question, the answer for the user, and the distraction answer.

The device further comprises: a pre-processing module 205 configured to acquire user data of users, determine category identification information of all the acquired user data, categorize all the user data according to the category identification information of all the user data, and generate an answer library corresponding to each piece of the category identification information for each category of user data after the categorization.

Here, the user data comprises: at least one of business data generated based on business operations of the users and the users' personal information data; and the category identification information comprises: at least one personal information attribute identification and/or at least one business attribute identification.

When the category identification information of the answer for the user is a business attribute identification, the distraction answer module 203 determines an answer library corresponding to the category identification information according to the business attribute identification, searches for user data corresponding to the personal information attribute identification in the determined answer library according to a personal information attribute identification of the user, and searches for user data related to the answer for the user in the found user data according to the semantics and/or characters of the answer for the user; or
when the category identification information of the answer for the user is a personal information attribute identification, determines an answer library corresponding to the category identification information according to the personal information attribute identification, and searches for user data related to the answer for the user in the determined answer library according to the semantics and/or characters of the answer for the user.

For example, the distraction answer module 203 determines a similarity between the answer for the user and the user data according to the semantics and/or characters of the answer for the user, and searches for user data related to the answer for the user according to the similarity.

For another example, if the number of the pieces of the found user data related to the answer for the user is greater than a set threshold, the distraction answer module 203 selects a set number of pieces of user data as distraction answers from the found user data related to the answer for the user according to the similarity in a descending order.

In addition, the pre-processing module 205 acquires changed user data when the user data of users changes; alternatively, acquires user data of users according to a set period, and updates, according to the acquired user data, an answer library corresponding to the user data.

The present invention is described with reference to the flow charts and/or block diagrams of the method, device (system), and computer program product according to the embodiments of the present invention. It should be understood that every process and/or block of the flow charts and/or block diagrams and a combination of processes and/or blocks of the flow charts and/or block diagrams can be implemented by computer program instructions. These computer program instructions can be provided to a general-purpose computer, a dedicated computer, an embedded processor, or a processor of another programmable data processing device, thereby producing a machine and causing these instructions to, when executed by the computer or the processor of another programmable data processing device, produce an apparatus for implementing functions specified in one or more processes in the flow charts and/or one or more blocks in the block diagrams.

These computer program instructions can also be stored in a computer readable storage medium capable of guiding a computer or other programmable data processing devices to work in a particular manner, so that the instructions stored in the computer readable storage medium produce a manufactured article that includes an instruction device for implementing functions specified in one or more processes in the flow charts and/or one or more blocks in the block diagrams.

These computer program instructions can also be loaded onto a computer or other programmable data processing devices, causing a series of operating steps to be executed on the computer or other programmable data processing devices to produce a process of computer implementation, thereby enabling instructions executed on the computer or other programmable data processing devices to implement functions specified in one or more processes in the flow charts and/or one or more blocks in the block diagrams.

In a typical configuration, a computation device includes one or more processors (CPUs), input/output interfaces, network interfaces, and a memory.

The memory may include computer readable media, such as a volatile memory, a Random Access Memory (RAM), and/or a non-volatile memory, e.g., a Read-Only Memory (ROM) or a flash RAM. The memory is an example of a computer readable medium.

Computer readable media include permanent, volatile, mobile and immobile media, which can implement information storage through any method or technology. The information may be computer readable instructions, data structures, program modules or other data. Examples of storage media of computers include, but are not limited to, Phase-change RAMs (PRAMs), Static RAMs (SRAMs), Dynamic RAMs (DRAMs), other types of Random Access Memories (RAMs), Read-Only Memories (ROMs), Electrically Erasable Programmable Read-Only Memories (EEPROMs), flash memories or other memory technologies, Compact Disk Read-Only Memories (CD-ROMs), Digital Versatile Discs (DVDs) or other optical memories, cassettes, cassette and disk memories or other magnetic memory devices or any other non-transmission media, which can be used for storing information accessible to a computation device. According to the definitions herein, the computer readable media do not include transitory media, such as modulated data signals and carriers.

It should be further noted that the terms of "including," "comprising" or any other variants thereof intend to encompass a non-exclusive inclusion, so that a process, method, product or device comprising a series of elements not only comprises these elements, but also comprises other elements that are not specifically listed, or further comprises elements that are inherent to the process, method, product or device. When there is no further restriction, elements defined by the statement "comprising one..." do not exclude that a process, method, product or device comprising the above elements further comprises additional identical elements.

A person skilled in the art should understand that the embodiments of the present application may be provided as a method, a system, or a computer program product. Therefore, the present application may be implemented as a complete hardware embodiment, a complete software embodiment, or an embodiment combining software and hardware. Moreover, the present application may be in the form of a computer program product implemented on one or more computer usable storage media (including, but not limited to, a magnetic disk memory, CD-ROM, an optical memory, and the like) comprising computer usable program codes therein.

Only embodiments of the present application are described above, which are not used to limit the present application. To a person skilled in the art, the present application may have various modifications and variations. Any modification, equivalent substitution or improvement made within the spirit and principle of the present application shall be encompassed by the claims of the present application.

## Claims

1. A verification method, comprising:
generating a security question and an answer for a user matching the security question for verifying the user;
determining, according to category identification information of the answer for the user, user data of users corresponding to the category identification information;
searching, in the determined user data, for pieces of the user data related to the answer for the user to serve as distraction answers; and
verifying the user according to the security question, the answer for the user, and the distraction answers.

2. The method according to claim 1, wherein, before generating a security question and an answer for the user matching the security question for verifying the user, the method further comprises:
acquiring user data of users;
determining category identification information of the acquired user data;
categorizing the user data according to the category identification information of the user data, and generating an answer library corresponding to the category identification information for each category of user data after the categorization;
wherein the user data comprises: at least one of business data generated based on business operations of the users and the users' personal information data; and
wherein the category identification information comprises: at least one personal information attribute identification and/or at least one business attribute identification.

3. The method according to claim 2, wherein the searching for user data related to the answer for the user according to the category identification information comprises:
when the category identification information of the answer for the user is a business attribute identification, determining an answer library according to the business attribute identification, searching for, according to a personal information attribute identification of the user, user data corresponding to the personal information attribute identification in the determined answer library, and searching for the user data related with the answer for the user in the found user data according to semantics and/or characters of the answer for the user; or
when the category identification information of the answer for the user is a personal information attribute identification, determining an answer library corresponding to the category identification information according to the personal information attribute identification, and searching for the user data related to the answer for the user in the determined answer library according to semantics and/or characters of the answer for the user.

4. The method according to claim 3, wherein the searching for user data related to the answer for the user according to semantics and/or characters of the answer for the user comprises:
determining a similarity between the answer for the user and the user data according to the semantics and/or characters of the answer for the user, and
searching for user data related to the answer for the user according to the similarity.

5. The method according to claim 4, wherein the searching for user data related to the answer for the user as distraction answers comprises:
if the number of pieces of the found user data related to the answer for the user is greater than a set threshold, selecting, according to the similarity in a descending order, a set number of pieces of user data as distraction answers from the found user data related to the answer for the user.

6. The method according to claim 2, wherein the acquiring user data of users comprises:
acquiring changed user data when the user data of users changes; or,
acquiring user data of users according to a set period; and wherein the method further comprises: according to the acquired user data, updating the answer library corresponding to the user data.

7. A verification device, comprising:
a security question module configured to generate a security question and an answer for a user matching the security question for verifying the user;
a determining module configured to determine, according to category identification information of the answer for the user, user data of users corresponding to the category identification information;
a distraction answer module configured to search, in the determined user data, for pieces of the user data related to the answer for the user to serve as distraction answers; and
a verification module configured to verify the user according to the security question, the answer for the user, and the distraction answers.

8. The device according to claim 7, wherein the device further comprises: a pre-processing module configured to acquire user data of users, determine category identification information of the acquired user data, categorize the user data according to the category identification information of the user data, and generate an answer library corresponding to the category identification information for each category of user data after the categorization;
wherein the user data comprises: at least one of business data generated based on business operations of the users and the users' personal information data; and
wherein the category identification information comprises: at least one personal information attribute identification and/or at least one business attribute identification.

9. The device according to claim 8, wherein, when the category identification information of the answer for the user is a business attribute identification, the distraction answer module determines an answer library according to the business attribute identification, searches for, according to a personal information attribute identification of the user, user data corresponding to the personal information attribute identification in the determined answer library, and searches for user data related to the answer for the user in the found user data according to semantics and/or characters of the answer for the user; or
when the category identification information of the answer for the user is a personal information attribute identification, the distraction answer module determines an answer library corresponding to the category identification information according to the personal information attribute identification, and searches for user data related to the answer for the user in the determined answer library according to semantics and/or characters of the answer for the user.

10. The device according to claim 9, wherein the distraction answer module determines a similarity between the answer for the user and the user data according to semantics and/or characters of the answer for the user, and searches for user data related to the answer for the user according to the similarity.

11. The device according to claim 10, wherein, if the number of pieces of the found user data related to the answer for the user is greater than a set threshold, the distraction answer module selects, according to the similarity in a descending order, a set number of pieces of user data as distraction answers from the found user data related to the answer for the user.

12. The device according to claim 8, wherein the pre-processing module acquires changed user data when the user data of users changes; or acquires user data of users according to a set period; and updates, according to the acquired user data, the answer library corresponding to the user data.
